# FASCICULE DE BREVET EUROPEEN

(11) **EP 3 570 238 B1**
(45) Date de publication et mention de la délivrance du brevet: **29.11.2023**
(21) Numéro de dépôt: 19172647.0
(22) Date de dépôt: 03.05.2019
(51) Int. Cl.: G06Q 20/34, G06Q 20/40, G06Q 20/32, G06Q 20/38, H04L 9/32, H04W 12/40, H04L 9/40

(54) **PROCÉDÉ DE RÉALISATION D'UNE TRANSACTION, TERMINAL, SERVEUR ET PROGRAMME D'ORDINATEUR CORRESPONDANT**
VERFAHREN ZUR DURCHFÜHRUNG EINER TRANSAKTION, ENDGERÄT, SERVER UND ENTSPRECHENDES COMPUTERPROGRAMM
METHOD FOR CONDUCTING A TRANSACTION, TERMINAL, SERVER AND CORRESPONDING COMPUTER PROGRAM

(30) Priorité: 18.05.2018 FR 1854204
(43) Date de publication de la demande: 20.11.2019
(73) Titulaire: Banks and Acquirers International Holding, 75015 Paris (FR)
(72) Inventeur: QUENTIN, Pierre, 95880 ENGHIEN LES BAINS (FR)
(74) Mandataire: Germain Maureau

(56) Documents cités:
- EP-A1- 3 319 031
- WO-A1-2006/100171
- WO-A1-2010/070539
- WO-A1-2015/158618
- WO-A1-2016/122457
- GB-A- 2 508 015
- US-A1- 2002 133 467
- US-A1- 2014 136 350
- US-A1- 2016 063 480

## Description

### 1. Domaine de l'invention

L'invention concerne la sécurisation des paiements. Plus particulièrement, l'invention concerne la sécurisation des paiements effectués en utilisant un terminal de communication portable tel qu'un smartphone, une tablette ou encore une montre connectée. Par la suite ce type de paiement est appelé paiement mobile. Plus spécifiquement encore, un objet de la présente technique est d'augmenter le niveau de sécurité d'une transmission de données dans le cadre d'un paiement mobile réalisé avec un terminal de communication portable (par exemple un smartphone ou une tablette) et une carte de paiement.

### 2. Art Antérieur

D'une manière générale, les paiements en ligne, dont les paiements mobiles représentent d'une part un type particulier et d'autre part croissante des paiements effectués chaque jour dans le monde. Ils peuvent être effectués par le biais de fournisseurs de paiement, tels que Paypal^{™}, ou en faisant appel à des organisations bancaires traditionnelles, en utilisant une carte bancaire de paiement.

Cependant, le paiement en ligne est marqué par un taux de fraude relativement élevé. En France, on estime qu'environ 5% des paiements en ligne effectués sur Internet sont frauduleux. Ces paiements frauduleux de cinq pour cent représentent environ trente-trois pour cent du coût total de la fraude. Il est donc nécessaire d'avoir des moyens d'une part d'identifier les tentatives de fraude et d'autre part de bloquer ces tentatives.

Un des problèmes dans les transactions par mobile est qu'elles sont effectuées en mode "carte non présente" (c.-à-d. CNP, pour "carte non présente" en anglais). Dans ce mode, aucun dispositif n'étant chargé de vérifier l'intégrité de la carte (comme par exemple un terminal de paiement), il n'est pas possible de vérifier que le détenteur de la carte possède le code PIN nécessaire pour valider une transaction : la carte de paiement n'est pas utilisée pour effectuer la transaction. Seules les données inscrites sur la carte le sont. Ces données peuvent être volées pour effectuer des transactions par des fraudeurs, éventuellement en utilisant d'autres applications marchandes, dans le cadre d'autres paiements mobiles. Accessoirement, le terminal de communication de l'utilisateur (qui comprend toutes les données des cartes de paiement utilisées par celui-ci), peut également être volé, donnant accès au voleur à l'ensemble des données de l'utilisateur et permettant au voleur d'effectuer des transactions frauduleuses.

Ainsi, dans le but de sécuriser les transactions effectuées en mode CNP, des systèmes et des méthodes ont été proposés pour résoudre ces problèmes de fraude. Ces méthodes posent des problèmes de commodité pour l'utilisateur ou d'autres problèmes de sécurité. C'est par exemple la méthode décrite dans le document de brevet WO2012053780. Dans ce document, un système et une méthode de vérification sont décrits. Plus particulièrement un procédé et un système utilisant des informations sur l'adresse MAC d'un terminal client sont décrits. Lors d'une transaction impliquant un paiement, un processus d'authentification est mis en oeuvre dans lequel l'adresse MAC du terminal utilisé par l'utilisateur souhaitant effectuer un paiement est comparée à une adresse MAC de référence, définie ou obtenue par le serveur bancaire, serveur qui doit autoriser un paiement ou une transaction.

Cette méthode, bien que potentiellement intéressante, est néanmoins peu pratique. En effet, d'une part, cette méthode oblige l'utilisateur à toujours utiliser le même appareil pour effectuer un paiement (sauf à définir plusieurs appareils autorisés à effectuer une transaction). D'un autre côté, il existe de nombreuses méthodes pour falsifier une adresse MAC d'un périphérique. Plus particulièrement, la méthode décrite dans WO2012053780 est basée sur l'obtention d'une adresse MAC à partir d'un navigateur Web. Cependant, un pirate qui souhaite obtenir une adresse MAC d'un utilisateur n'aura aucune difficulté à obtenir cette adresse lorsqu'il saisira les données de carte de crédit de l'utilisateur en question, par exemple en utilisant une méthode consistant à se placer avant le serveur du commerçant (ou de l'éditeur de l'application utilisée pour le paiement). Ainsi, le procédé de WO2012053780 ne semble pas très utile puisque les informations complémentaires (l'adresse MAC du dispositif transactionnel) seraient aussi vulnérables que les autres. La méthode décrite aurait donc peu de chance de sécuriser réellement la transaction.

D'autres méthodes sont également disponibles. Certains impliquent de fournir à l'utilisateur des numéros de cartes bancaires uniques. Ces numéros sont fournis en fonction des besoins du client. Cette méthode est intéressante mais ne supprime pas la possibilité pour l'utilisateur d'utiliser ses propres informations de carte pour effectuer des transactions. D'autres méthodes, actuellement largement utilisées, consistent à transmettre un message de type SMS au client qui effectue une transaction pour s'assurer qu'il est le porteur de la carte. L'utilisateur doit saisir, au moment de la transaction, un mot de passe transmis dans le SMS. Par conséquent, la banque s'assure avec une probabilité raisonnable que celui qui effectue la transaction est l'utilisateur. Cette méthode présente deux inconvénients : d'une part, elle oblige l'utilisateur à fournir son numéro de téléphone à la banque avant toute transaction et de manière sécurisée ; d'autre part, cette méthode ne fonctionne que si la banque du client est également la banque qui gère la transaction pour le compte du commerçant, ce qui n'est pas nécessairement le cas, surtout à l'étranger, là précisément où la plus grande partie de la fraude est réalisée. Ainsi, la méthode susmentionnée n'est pas très efficace dans ce cas.

D'autres méthodes sont également connues par exemple des documents US2016/063480 A1, EP3319031 A1, US2014/136350 A1, et WO2010/070539 A1.

### 3. Résumé de l'invention

La méthode proposée par les inventeurs ne pose pas ces problèmes de l'art antérieur. En effet, il est proposé une méthode de localisation d'un utilisateur effectuant un paiement mobile.

Plus particulièrement, l'invention se rapporte à un procédé de réalisation d'une transaction tel que le procédé de la revendication 1.

Ainsi, l'invention permet de valider une transaction (tel qu'un paiement mobile) sur la base d'un code spécifique, le code de certification, qui est obtenu à partir du moyen de paiement dont les données sont utilisées pour permettre la réalisation du paiement mobile.

Ledit code de certification dépend d'une valeur qui n'est pas nécessairement lié au moyen de paiement lui-même, ce qui permet d'augmenter la sécurité de ce code de certification.

Selon une caractéristique particulière, le paramètre de certification appartient au groupe comprenant :
- un paramètre d'une fonction de création dudit code de certification ;
- une valeur représentative d'un identifiant d'un commerçant ;
- une valeur représentative d'un identifiant de terminal de communication ;
- une valeur représentative de la transaction ;
- une valeur représentative d'une date et/ou d'une heure de la transaction.

Ainsi, le code de certification est créé de manière unique, pour la transaction en cours de réalisation. Le code de certification ne peut donc pas être réutilisé une deuxième fois (rejeu) dans le cadre d'une autre transaction qui serait effectuée par un fraudeur.

Selon une caractéristique particulière, ladite étape d'insertion dudit code de certification, au sein d'une structure de données de transaction comprend une étape de sélection, parmi une pluralité de champs disponibles, d'un champs spécifique existant.

Ainsi, plutôt que d'ajouter un champ dédié à la réception du code de certification, la technique permet de sélectionner, au sein de champs disponibles, d'un champ spécifique, au sein duquel le code de certification est inséré.

Ledit champ spécifique est le champ dédié à la réception du code de vérification (CVV).

Ainsi, au lieu d'utiliser le code de vérification (CVV) (statique) pour pouvoir valider que le possesseur du moyen de paiement connait bien l'intégralité des données qui s'y attachent, les inventeurs proposent de substituer à ce code, le code de certification (qui est dynamique et donc plus sécurisé), et ce sans qu'il soit nécessaire de modifier la structure de données transmise via le réseau de communication.

Selon un mode de réalisation particulier, le paramètre de certification comprend une donnée représentative d'un identifiant dudit terminal de communication et une donnée représentative d'une heure de la transaction.

Selon un mode de réalisation particulier, le code de certification est représentatif d'une opération de chiffrement effectué par ledit moyen de paiement, ladite opération de chiffrement étant effectuée par l'intermédiaire d'une communication de type NFC entre ledit terminal de communication de l'utilisateur et ledit moyen de paiement.

Selon un autre aspect, l'invention se rapporte également à un serveur de traitement d'une transaction, tel que le serveur de la revendication 5.

Selon un autre aspect, l'invention se rapporte également à un terminal de communication tel que le terminal de communication de la revendication 6.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 décrit un mode de réalisation du procédé de réalisation de transaction ;
- la figure 2 décrit un mode de réalisation dérivé du procédé de réalisation de transaction ;
- la figure 3 illustre une architecture d'un serveur apte à mettre en oeuvre un procédé de réalisation de transaction ;
- la figure 4 illustre une architecture d'un client apte à mettre en oeuvre un procédé de réalisation de transaction.

### 5. Description d'un mode de réalisation

### 5.1. Rappel du principe de l'invention

Comme exposé préalablement, il a été constaté que les solutions actuelles ne permettaient pas forcément d'assurer que le paiement mobile qui est réalisé est issu du porteur du moyen de paiement (d'une carte de paiement par exemple) dont les données sont utilisées. L'objet de la méthode proposée est de faire en sorte que, lors de l'utilisation de données du moyen de paiement en mode CNP (c'est-à-dire en saisissant les données de paiement dans un formulaire ou en utilisant les données de paiement sous leur forme textuelle pour créer une transaction), dans le cadre d'un paiement mobile, on puisse tout de même obtenir une certification de la présence du moyen de paiement. En résumé, l'objectif est de passer d'un mode CNP (utilisation textuelle des données de paiement) à un mode où la présence du moyen de paiement est vérifiée sans fondamentalement changer les habitudes de l'utilisateur et en toute discrétion.

Pour ce faire, les étapes conduisant à la validation de la transaction sont modifiées. Dans au moins un mode de réalisation de la méthode proposée, on obtient, en plus (ou à la place) des données de la carte de paiement (nom, numéro, date, code de vérification visuel - CVV), une donnée transmise par le moyen de paiement lui-même, de manière indépendante et complémentaire. Dans un mode de base, cette donnée transmise par le moyen de paiement consiste en une signature numérique de certaines des données qui y sont enregistrées.

Ainsi, le principe général de la présente technique repose sur la mise en oeuvre d'un terminal de communication comprenant des moyens d'obtention de données (comme par exemple un processeur ou un circuit comprenant un microprocesseur de traitement) en provenance d'un moyen de paiement (étant entendu qu'il s'agit par exemple d'une carte de paiement et/ou d'un autre dispositif de communication comprenant une fonction de paiement). Plus spécifiquement, dans au moins un mode de réalisation, un moyen d'obtention de données en provenance d'un moyen de paiement se présente sous la forme d'un module de communication sans contact, un tel module étant plus spécifiquement un module de communication en champ proche (NFC). Ce module reçoit de la part d'un processeur du terminal de communication, une instruction ou une commande d'obtention de données sans contact. Il peut s'agir d'une commande à caractère général. Par ailleurs, ce module est relié à une antenne sans contact. Cette antenne sans contact sert à émettre un signal à destination du moyen de paiement et à recevoir un signal en provenance de ce moyen de paiement. Pour ce faire, on met par exemple en oeuvre une application, installée au sein du terminal de communication, application comprenant des moyens de détection de champs de saisie de données de moyens de paiement.

Un moyen de paiement sans contact se présente par exemple sous la forme d'une carte de paiement (ou carte de crédit ou carte de débit), comprenant une antenne de type NFC *("Near Field Communication"),* cette antenne comprenant des moyens de transmission de données vers un récepteur, lorsqu'elle reçoit, de la part de ce récepteur, une requête en ce sens (la requête prenant par exemple la forme d'un signal électromagnétique). L'antenne, appelé antenne sans contact, peut être reliée à un processeur. Ce processeur peut par exemple être la puce de la carte à puce ou un processeur supplémentaire noyé dans le substrat de la carte (tout comme l'antenne). Accessoirement, un moyen de paiement sans contact peut également se présenter sous la forme d'un terminal de communication (un deuxième terminal de communication), lequel est muni de moyens de transmission de données sans contact et éventuellement d'une application spécifiquement destinée à transmettre des données équivalentes ou identiques à des données de carte de paiement. Une telle application peut par exemple être une application bancaire, installée au sein du terminal de communication, et qui conserve ces données de manière sécurisée. Dans ce cas, par exemple, la technique est mise en oeuvre en apposant ce deuxième terminal de communication sur le premier terminal de communication. Une telle mise en oeuvre est tout à fait envisageable dans la mesure où de nombreuses personnes disposent à la fois d'une tablette et d'un téléphone intelligent, le téléphone intelligent disposant d'une application « bancaire », par exemple installée au sein d'un environnement sécurisé, tandis que la tablette est utilisée de manière plus générale et plus libre par plusieurs personnes du foyer, cette tablette n'étant pas destinée à contenir des données confidentielles.

Un cas d'usage général est le suivant :
- à partir d'une application « marchande », installée sur le terminal de communication (application spécifique à un marchand, ou application générique de type « navigateur »), l'utilisateur souhaite effectuer un achat de produit ou de service ;
- lorsqu'il valide sa commande, l'utilisateur doit fournir des données permettant le paiement (nom, numéro, date, CVV) : ces données sont par exemple saisies par l'utilisateur lui-même (dans des champs de saisie prévus à cet effet) ou encore « automatiquement » saisies par une application de paiement (par exemple Google Pay^{™}, Samsung Pay^{™}, Apple Pay^{™}, ces applications sous « hébergeant » de manière sécurisée les données de paiement fournies par l'utilisateur) ou encore une application bancaire ;
- un module applicatif spécifique, intégré ou séparé de l'éventuelle application de paiement utilisée, détecte la nécessité de paiement et requiert, auprès de l'utilisateur, que celui-ci appose son moyen de paiement (sans contact) à proximité de l'interface sans contact correspondante du terminal de communication (située en règle générale au dos du terminal de communication) ;
- le procédé de sécurisation de la présente technique est alors mis en oeuvre, à partir d'un dialogue (décrit par la suite) entre le moyen de paiement (MP) et le terminal de communication (ComT), et un serveur transactionnel (SrvT) : une première étape de ce procédé abouti à l'obtention d'une donnée particulière fournie par le moyen de paiement, cette donnée étant appelée code de certification ; le code de certification, obtenu à partir du moyen de paiement de l'utilisateur, est utilisé, dans une deuxième étape du procédé, pour certifier que la transaction est menée par l'utilisateur avec le moyens de paiement « en main », et non pas seulement avec les données du moyen de paiement (par exemple les données inscrites sur la carte de paiement).

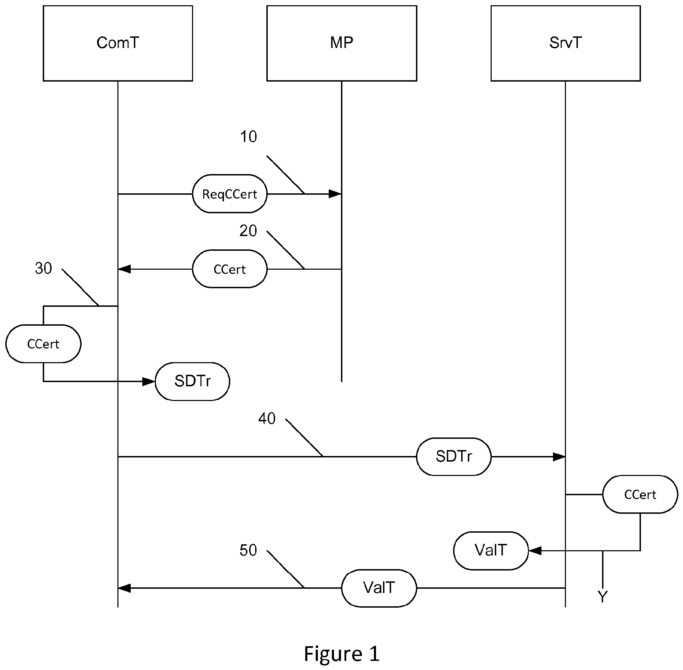

Ce procédé de sécurisation décrit en relation avec la figure 1 comprend :
- une étape d'émission (10), à destination du moyen de paiement dont les données sont utilisées pour la transaction, d'une requête d'obtention d'un code de certification (ReqCCert) ;
- une étape de réception (20), en provenance dudit moyen de paiement, dudit code de certification (CCert) ;
- une étape d'insertion (30) dudit code de certification (CCert), au sein d'une structure de données de transaction (SDTr) ;
- une étape de transmission (40) de la structure de données de transaction (SDTr) audit serveur ;
- et lorsque le code de certification reçu par ledit serveur est valide, une étape de réception (50) d'une donnée représentative de la validation (VaIT) de la transaction par ledit serveur.

Les données utilisées pour la transaction comprennent donc, en sus des données usuelles (nom, numéro, date de validité), une donnée complémentaire (code de certification) directement issue du moyen de paiement lui-même. Ces données sont transmises, par l'intermédiaire des interfaces usuelles, au serveur (SrvT) en charge de traiter la transaction. Le traitement de la transaction comprend une phase complémentaire qui consiste à vérifier que le code de certification reçu est conforme, par rapport au code de certification attendu. Ainsi, cette vérification est effectuée par un serveur qui possède les données cryptographiques nécessaires à la vérification de la signature. Il s'agit donc en règle générale du serveur bancaire ayant fourni les données utilisées par le moyen de paiement (donc plutôt le serveur bancaire de l'utilisateur). Cependant, le prestataire de services de paiement (la banque) peut déléguer, à des tiers de confiance, ces opérations de validation des transactions, et peut ainsi autoriser un autre serveur (une autre entité) à effectuer ces opérations à sa place.

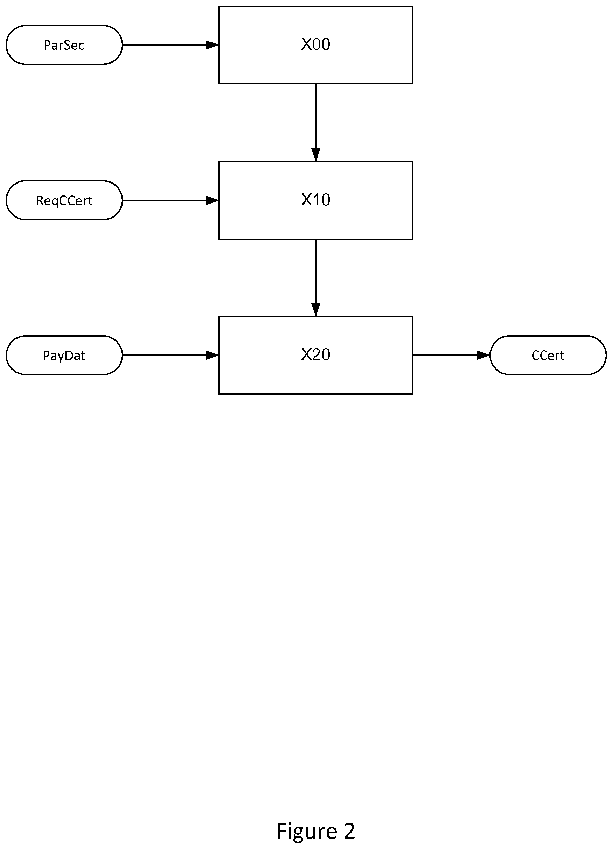

Selon un exemple particulier qui ne fait pas partie de la présente invention, la création du code de certification est mise en oeuvre par le moyen de paiement comme explicité en relation avec la figure 2. Le moyen de paiement reçoit (X10), en provenance du terminal de communication, une requête d'établissement d'un code de certification. La transmission de cette requête fait suite à un premier échange (X00) (handshake) entre le terminal de communication et le moyen de paiement, handshake au cours duquel des paramètres de sécurisation de transaction (ParSec) peuvent être échangés. A réception de la requête d'établissement d'un code de certification, le moyen de paiement utilise une ou plusieurs données du moyen de paiement (PayDat) pour générer (X20) un code de certification, lequel est sécurisé par l'utilisation d'un secret détenu au mois (voire au plus) par le moyen de paiement lui-même. Le code de certification est alors transmis au terminal de communication afin qu'il puisse ajouter celui-ci aux données transmises au serveur (par l'intermédiaire d'un réseau de communication) auquel le terminal de communication est connecté. Ainsi, l'établissement du code de certification est réalisé en fonction d'au moins une donnée du moyen de paiement.

Selon cet exemple particulier, le code de certification peut être généré, par le moyen de paiement lui-même, de plusieurs manières différentes. Par exemple, le moyen de paiement peut générer une signature numérique des données de paiement (nom, numéro, date, CVV) et transmettre cette signature au terminal de communication. Les données sont signées à l'aide par exemple d'une clé privée de la carte. Les données (nom N1, numéro N2, date D, cryptogramme C) sont par exemple concaténées (N1 | N2 | D | C) pour former une chaine de caractères CC, sur laquelle une opération cryptographique est appliquée, en utilisant la clé privée (KPriv) du moyen de paiement. Cette clé privée (KPriv) n'est détenue que par le moyen de paiement.

Dans le mode de réalisation de l'invention le code de certification n'est pas l'unique donnée permettant de valider la transaction. Dans ce mode de réalisation, la donnée validant ou non la transaction est un identifiant codé du terminal de communication de l'utilisateur, identifiant qui est « codé » par le moyen de paiement, pour produire un code de certification du terminal de communication. Le code de certification du terminal de communication à partir duquel la transaction est réalisée est ainsi obtenu à partir d'une opération effectuée par le moyen de paiement (carte de paiement sans contact). Le code de certification du terminal de communication devient l'information permettant de délivrer l'autorisation de transaction (c'est-à-dire de valider qu'une transaction peut être réalisée). Ce mode de réalisation présente plusieurs avantages. En premier lieu, ce mode de réalisation permet de s'affranchir des problématiques de récupération de montant de transaction (montant qui n'est pas nécessairement disponible au niveau du terminal lui-même). En deuxième lieu, une telle mise en oeuvre permet au serveur (bancaire), à réception du code de certification du terminal de communication, de déchiffrer celui-ci à l'aide de la clé publique du moyen de paiement, et de vérifier que l'identifiant du terminal de communication correspond à un identifiant « autorisé » par le serveur (bancaire ou transactionnel) ce qui permet d'ajouter un niveau de sécurisation supplémentaire. D'une manière générale, le terminal de communication peut paramétrer le code de certification (et donc utiliser un paramètre de certification qu'il transmet au moyen de paiement), afin de rendre celui-ci unique (c'est-à-dire non utilisable une deuxième fois). Plus particulièrement, parmi les paramètres de certifications permettant de conférer une unicité au code de certification, on peut citer :
- un paramètre d'une fonction de création dudit code de certification : ce paramètre permet de déterminer par exemple l'ordre de concaténation des données bancaires, ou encore ce paramètre peut fournir une fonction d'association des données bancaires ;
- une valeur représentative d'un identifiant d'un commerçant : cette valeur peut être fournie par le commerçant ou par l'éditeur de l'application sur laquelle le paiement est initié ;
- une valeur représentative d'un identifiant de terminal de communication : comme expliqué précédemment, cette valeur peut par exemple être représentative d'un identifiant de carte SIM ou USIM ;
- une valeur représentative de la transaction, comme par exemple le montant de cette transaction ;
- une valeur représentative d'une date et/ou d'une heure de la transaction,
- une valeur aléatoire, permettant de créer le code de certification en fonction d'un paramètre fournit par le terminal de communication lui-même, ou par le serveur transactionnel ; dans ce dernier cas, le nombre aléatoire est transmis par le serveur transactionnel au terminal de communication afin de permettre la comparaison ultérieure du code de certification et empêcher le rejeu.
- une combinaison des paramètres précédemment mentionnés, en fonction des modes de réalisation.

Ainsi, l'établissement du code de certification est réalisé en fonction d'au moins une donnée du moyen de paiement et/ou d'une donnée de terminal de communication. Ce ou ces paramètres peuvent être générés avec un échange supplémentaire avec le serveur transactionnel afin que celui-ci puisse disposer du ou des paramètres utilisés pour générer le code de certification et par la suite pour vérifier celui-ci. Avantageusement encore, le ou les paramètres sont tout ou partie issus d'un échange préalable (handshake) qui a lieu entre le terminal de communication et le serveur transactionnel. Ce handshake permet de déterminer des modalités d'échange entre le terminal de communication et le serveur. Il délivre des données qui sont sécurisées (comme des clés de session par exemple). A partir de ces clés de session, certains des paramètres précédents peuvent être dérivés (valeur aléatoire, fonction de création du code de certification, etc.). L'avantage est d'assurer que l'on ne puisse pas faire de rejeu du code de certification pour une autre transaction.

Le code de certification, créé par le moyen de paiement utilisé pour réaliser la transaction (carte de paiement, deuxième terminal de communication), est inséré, par le terminal de communication au sein d'une structure de données de transaction. L'insertion est précédée d'une étape de sélection, parmi une pluralité de champs disponibles, d'un champs spécifique existant. Selon une autre caractéristique, le champ spécifique au sein duquel le code de certification est inséré est le champ dédié à la réception du code de vérification visuel (CVV). Ainsi, au lieu de requérir la saisie de ce code par l'utilisateur (saisie qui peut poser problème, notamment sur certains sites peu regardant au niveau de la sécurité des données), on utilise ce champ pour y insérer le code de certification. Dans d'autres modes de réalisation, le code de certification est transmis en même temps que le « token » (jeton) représentant l'identification des données bancaires de l'utilisateur qui effectue le paiement. Pour mémoire, la « tokenisation » consiste à remplacer une donnée par une autre donnée sans qu'il n'y ait aucune relation entre les deux. Le « token » (ou jeton) est utilisé en lieu et place de la donnée sensible (par exemple le numéro - PAN- de la carte bancaire), c'est donc ce jeton qui est exposé aux menaces, et non la donnée sensible (donc pas le PAN). Parallèlement, une base est mise en place pour stocker les correspondances entre les données et leurs jetons correspondants, base qui est appelée « base de tokenization ». Dans le cas de figure de l'utilisation d'un « token », celui-ci est enregistré au sein du terminal de communication, par exemple à l'aide des mécanismes décrits dans le mode de réalisation suivant.

On présente par la suite, une mise en oeuvre du principe exposé précédemment. Cette mise en oeuvre n'est nullement limitative et toute autre mise en oeuvre comprenant les mêmes caractéristiques que celles qui sont exposées est envisageable. Il est bien entendu que l'ensemble des caractéristiques et modes de réalisation décrits dans la présente sont combinables sans qu'il soit nécessaire de décrire toutes les combinaisons possibles.

### 5.2. Description d'un mode de réalisation.

Dans ce mode de réalisation on utilise un code de certification obtenu, lors du paiement à l'aide du terminal de communication à partir duquel la transaction est réalisée, ce code étant produit par la carte de paiement sans contact de l'utilisateur. Pour produire ce code de certification, l'utilisateur est invité à poser (à approcher) sa carte de paiement sans contact au dos de son terminal de communication.

Le terminal de communication comprend pour sa part un élément de sécurisation (SE, « Secure Element ») et/ou un environnement d'exécution sécurisé (TEE, « Trusted Execution Environment ») qui comprend une application spécifique (de type « Contactless Registry Event Listener » -CREL ou son équivalent en fonction de l'environnement). Ainsi, dans ce mode de réalisation, on considère que le terminal de communication héberge, au moins au travers de l'élément sécurisé (SE) (ou d'un TEE et/ USIM, SIM, UICC), au moins une application « bas niveau » en charge de la gestion des données de paiement (activation/désactivation des cartes de paiement). L'élément sécurisé dispose d'une interface de communication avec un contrôleur de communication sans contact, lequel est câblé avec l'antenne sans contact du terminal de communication. Dans ce mode de réalisation une application d'interrogation (APPINT) est mise en oeuvre au sein de l'élément sécurisé. Cette application d'interrogation est appelée par une application de paiement du système d'exploitation ouvert (Android^{™}, iOS^{™}, etc.). L'Application de paiement gère le traitement, à partir de l'application bas niveau, des données nécessaires à la mise en oeuvre d'un paiement (par exemple insertion des données « nom », « numéro », « date », « ccv » dans les champs prévus à cet effet). Parallèlement ou successivement, l'application de paiement requiert, auprès de l'application d'interrogation, l'obtention d'un code de certification. Pour requérir ce code, l'application d'interrogation peut disposer de paramètres prédéfinis ou se voir fournir des paramètres par l'application de paiement.

Après notification de l'application de paiement, la carte de paiement sans contact est placée à proximité de l'antenne sans contact par l'utilisateur. L'application d'interrogation requiert l'obtention du code de certification en transmettant une commande idoine à la carte de paiement, laquelle réalise l'opération demandée, en fonction des paramètres qui sont transférés dans la requête d'obtention du code de certification. Dans ce mode de réalisation, deux paramètres sont utilisés : une valeur représentative de l'identifiant du terminal et une valeur représentative de l'heure de la transaction. Ces deux valeurs représentatives sont par exemple concaténées et transmises à la carte de paiement dans la requête d'obtention du code de certification. Les valeurs représentatives peuvent par exemple être un hash de la valeur d'origine, ou une contraction de cette valeur d'origine ou encore une extraction d'une partie de celle-ci. IL peut aussi s'agir de la valeur d'origine en tant que telle. Ceci est déterminé en fonction de la taille de données disponibles pour le paramétrage dans la requête d'obtention du code de certification.

Le carte de paiement effectue alors le calcul code de certification, en fonction du ou des paramètres transmis et restitue ce code de certification au terminal de communication. Plus particulièrement, le contrôleur de communication sans contact reçoit et transmet, par exemple au travers d'une interface HCl *(« Host Contrôler Interface »),* le code de certification à l'application d'interrogation qui, en fonction des mises en oeuvre opérationnelles, transmet elle-même ce code de certification à l'application de paiement (ou bien à l'application du commerçant). Le code de certification est alors inséré dans la structure de données de transaction, laquelle est transmise sur le réseau de communication jusqu'au serveur, ou bien encore insérée dans une réponse de type « http » (par exemple par l'intermédiaire de services AJAX sécurisés), à destination du serveur (en ligne) du commerçant ou du serveur bancaire (du commerçant).

Comme déjà indiqué préalablement, le terminal à partir duquel la transaction est réalisée n'est pas un terminal de paiement (au sens un terminal dans lequel la carte bancaire est inséré et dans lequel un code PIN est saisi). Il s'agit d'un terminal tel qu'une tablette ou un smartphone et non pas d'un terminal de paiement tels que ceux installés chez des commerçants.

Ainsi, dans ce mode de réalisation, la méthode mise en oeuvre comprend, au niveau du terminal de communication :
- une étape d'émission, à destination du moyen de paiement dont les données sont utilisées pour la transaction, d'une requête d'obtention d'un code de certification ;
- une étape de réception, en provenance dudit moyen de paiement, dudit code de certification ;
- une étape d'insertion dudit code de certification, au sein d'une structure de données de transaction ;
- une étape de transmission de la structure de données de transaction audit serveur ; et
- lorsque le code de certification reçu par ledit serveur est valide, une étape de réception d'une donnée représentative de la validation de la transaction par ledit serveur.

Lorsque le code de certification correspond à au moins un code de certification attendu, une étape de délivrance d'une donnée représentative d'une validation de transaction à une entité.

La donnée représentative d'une validation de transaction peut ensuite être fournie pour valider la transaction bancaire (cette validation de transaction bancaire est réalisée à concurrence des autres paramètres et valeurs entrant dans le processus de validation, bien entendu) à une autre entité (comme par exemple un serveur bancaire, quand la transaction en elle-même est traitée par un serveur transactionnel).

Ainsi, la méthode permet de comparer le code de certification produit par le moyen de paiement (la carte de paiement NFC) avec un code de certification attendu. Le format du code de certification attendu peut être défini par la banque de l'utilisateur, de manière automatique ou statique. Pour une définition statique, les types et la nature des paramètres sont déterminés à l'avance lors de l'encodage de l'application bas niveau d'interrogation (par exemple). Pour une définition dynamique, ces paramètres font l'objet d'échanges entre le terminal de communication de l'utilisateur et le serveur idoine (serveur transactionnel ou serveur bancaire).

### 5.3. Serveur transactionnel

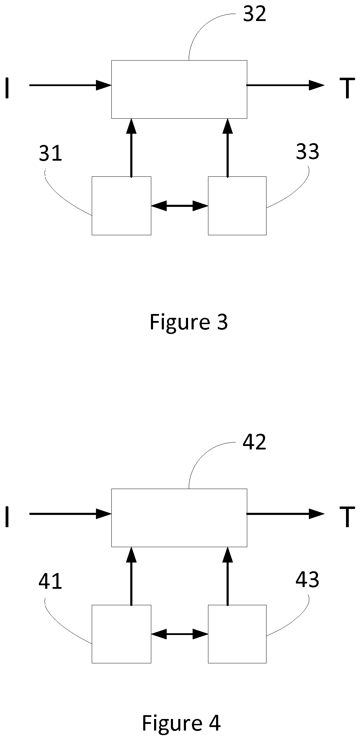

Dans au moins un mode de réalisation, la méthode décrite est mise en oeuvre par l'intermédiaire d'un serveur transactionnel, présenté en relation avec la figure 3. Un tel serveur peut, au choix, être mis en oeuvre par un organisme bancaire, un fournisseur de service de paiement ou un prestataire servant d'intermédiaire entre un ou plusieurs établissements bancaires ou établissements de paiements.

Un tel serveur de gestion comprend une mémoire 31, une unité de traitement 32 équipée par exemple d'un microprocesseur, et pilotée par le programme d'ordinateur 33, mettant en oeuvre le procédé selon l'invention. Dans au moins un mode de réalisation, l'invention est mise en oeuvre sous la forme d'un serveur bancaire, d'un système de paiement. Un tel serveur comprend :
- des moyens de réception d'une requête transactionnelle, en provenance au moins partielle du terminal de communication, comprenant au moins un identifiant de données de paiement (token) et ou/les données bancaires elles-mêmes, le tout accompagné d'un code de certification ; ces moyens peuvent se matérialiser sous la forme d'une interface de connexion (I) à un ou plusieurs réseaux de communication. Il peut s'agir d'interfaces logicielles ou d'interfaces matérielles (de type carte réseau ou modules matériels de communication réseau).
- des moyens d'obtention d'une donnée de vérification de code de certification au moyen de paiement utilisé pour la transaction ; Ces moyens peuvent se matérialiser sous la forme d'une interface de connexion (I) à un ou plusieurs réseaux de communication. Il peut s'agir d'interfaces logicielles ou d'interfaces matérielles (de type carte réseau ou modules matériels de communication réseau) ; ils peuvent également se matérialiser sou la forme d'une base de données de tokenisation, lorsque cette technique est utilisée pour effectuer des paiements.
- des moyens de détermination d'un code de certification courant associé aux données reçues au sein de la requête transactionnelle : il s'agit par exemple de moyen de calcul d'un code de certification courant à partir des données reçues : en cas de réception d'un token, il s'agit de retrouver les données bancaires associées à ce token et à partir de celles-ci et des paramètres connus de calcul du code de certification ;
- des moyens de comparaison des codes de certification entre eux, en fonction des données bancaires connues de l'utilisateur ;
- des moyens de fourniture, à une entité (serveur bancaire par exemple) d'une autorisation de transaction lorsque ladite comparaison est positive. Ces moyens peuvent se matérialiser sous la forme d'une interface de connexion à un ou plusieurs réseaux de communication. Il peut s'agir d'interfaces logicielles ou d'interfaces matérielles (de type carte réseau ou modules matériels de communication réseau).

Dans au moins un mode de réalisation, un tel serveur comprend également des moyens d'obtention d'au moins une information en provenance d'un terminal de communication qui est supposé être en possession de l'utilisateur dont on souhaite valider une transaction. Dans ce mode de réalisation, ce serveur peut par exemple transmettre une requête d'obtention de cette information au terminal de communication. Pour ce faire, il peut mettre en oeuvre plusieurs techniques, la première étant par exemple la transmission d'un message de type SMS à destination d'une application installée sur le terminal (c.f. Application et Terminal de communication), et ce afin de valider la transaction par rapport à un identifiant de terminal de communication connu et autorisé.

Lorsque cela est possible, le code de certification est issu d'un calcul réalisé avec la clé privée du moyen de paiement (par exemple clé privée de la carte sans contact) et les données de ce code de certification chiffré sont déchiffrées à l'aide de la clé publique de la carte, en possession du serveur bancaire et/ou du serveur transactionnel qui met en oeuvre la présente technique. De ce fait, lorsque le serveur déchiffre le code de certification reçu de la part du terminal mobile il est mesure de vérifier que les données obtenues par ce déchiffrement correspondent bien à des données attendues.

### 5.4. Dispositif pour la mise en oeuvre de l'invention

On présente, en relation avec la figure 4, une architecture simplifiée d'un dispositif mobile apte à transmettre sa position. Un tel dispositif mobile comprend une mémoire 41, une unité de traitement 42 équipée par exemple d'un microprocesseur, et pilotée par le programme d'ordinateur 43, mettant en oeuvre le procédé selon l'invention. Dans au moins un mode de réalisation, l'invention est mise en oeuvre sous la forme d'une application mobile installée sur un dispositif mobile en possession de l'utilisateur. Un tel dispositif mobile comprend :
- des moyens d'émission, à destination du moyen de paiement dont les données sont utilisées pour la transaction, d'une requête d'obtention d'un code de certification ;
- des moyens de réception, en provenance dudit moyen de paiement, dudit code de certification ;
- des moyens d'insertion dudit code de certification, au sein d'une structure de données de transaction ;
- des moyens de transmission de la structure de données de transaction audit serveur ; et
- des moyens de réception d'une donnée représentative de la validation de la transaction par ledit serveur.

Ces moyens se présentent sous le forme d'une application logicielle spécifique, ou encore sous la forme de composants matériels dédiés, tel qu'un élément de sécurisation (SE) ou un environnement d'exécution sécurisé. L'élément de sécurisation peut se présenter sous la forme d'une carte Sim, USim, UICC, ou encore un composant de sécurité spécifique, greffé sur la carte mère du terminal de communication. Plus particulièrement, dans au moins un mode de réalisation, ces moyens se présentent sous la forme de plusieurs composants matériels auxquels sont adjoint plusieurs composants logiciels. Plus particulièrement, les moyens d'émission de la requête d'obtention du code de certification sont compris dans un composant sécurisé qui comprend un accès plus ou moins direct à un contrôleur d'émission/réception de champ électromagnétique proche de type NFC, permettant d'interroger directement un moyen de paiement compatible NFC. Ce composant sécurisé est en charge de la détermination au moins partielle d'un paramètre de calcul du code de certification. Les autres composants du terminal de communication ont fait l'objet d'une description en lien avec le mode de réalisation proposé.

## Revendications

1. Procédé de traitement d'une transaction d'un terminal de communication (ComT), sollicitant auprès d'un serveur (SrvT), par l'intermédiaire d'un réseau de communication, la mise en oeuvre d'une transaction de paiement impliquant l'utilisation de données de paiement en mode Carte Non Présente lesdites données de paiement étant relatives à une carte de paiement de type « communication en champ proche » ou NFC, procédé mis en oeuvre au sein du terminal de communication, procédé comprenant :
- une étape de détermination d'une valeur de paramètre de certification, ledit paramètre de certification étant lié à ladite transaction ;
- une étape d'insertion de la valeur de paramètre de certification au sein d'une requête d'obtention d'un code de certification (ReqCCert) ;
- une étape d'émission (10), via une communication de type NFC, à destination de ladite carte de paiement, de la requête d'obtention d'un code de certification (ReqCCert) ;
- une étape de réception (20), via ladite communication de type NFC, en provenance de ladite carte de paiement, dudit code de certification (CCert), lequel est généré par ladite carte de paiement et est établi en fonction dudit paramètre de certification, et d'au moins une donnée dudit terminal de communication, ledit code de certification étant créé de manière unique pour la transaction en cours de réalisation ;
- une étape d'insertion (30) dudit code de certification (Ccert), au sein d'une structure de données de transaction (SDTr), ladite étape d'insertion (30) comprenant une étape de sélection, parmi une pluralité de champs disponibles, d'un champ spécifique existant, au sein duquel ledit code de certification (Ccert) est inséré, ledit champ spécifique étant le champ dédié à la réception du code de vérification visuel (CVV) ;
- une étape de transmission (40) de la structure de données de transaction (SDTr) audit serveur ;
- et lorsque le code de certification reçu par ledit serveur correspond à au moins un code de certification attendu, une étape de réception (50) d'une donnée représentative de la validation (VaIT) de la transaction par ledit serveur.

2. Procédé de traitement d'une transaction selon la revendication 1, **caractérisé en ce que** le paramètre de certification appartient au groupe comprenant :
- un paramètre d'une fonction de création dudit code de certification ;
- une valeur représentative d'un identifiant d'un commerçant ;
- une valeur représentative d'un identifiant de terminal de communication ;
- une valeur représentative de la transaction ;
- une valeur représentative d'une date et/ou d'une heure de la transaction.

3. Procédé de traitement d'une transaction selon la revendication 1, **caractérisé en ce que** le paramètre de certification comprend une donnée représentative d'un identifiant dudit terminal de communication et une donnée représentative d'une heure de la transaction.

4. Procédé de traitement d'une transaction selon la revendication 1, **caractérisé en ce que** le code de certification (Ccert) est représentatif d'une opération de chiffrement effectué par ladite carte de paiement, ladite opération de chiffrement étant effectuée par l'intermédiaire d'une communication de type NFC entre ledit terminal de communication de l'utilisateur et ladite carte de paiement.

5. Serveur de traitement d'une transaction de paiement, se présentant sous la forme d'un dispositif électronique connecté à un réseau de communication, ledit serveur comprenant:
- -des moyens de réception, en provenance d'un terminal de communication, selon la revendication 6;
- des moyens de réception d'une requête transactionnelle, comprenant au moins une donnée représentative d'un paiement en Mode Carte Non Présente à effectuer à partir dudit terminal de communication et un code de certification, ladite au moins une donnée étant relative à une carte de paiement de type « communication en champ proche » ou NFC, et ledit code de certification étant généré par ladite carte de paiement et étant établi en fonction d'un paramètre de certification et d'au moins une donnée dudit terminal de communication, et inséré dans ladite requête transactionnelle dans le champ dédié à la réception du code de vérification visuel (CVV), ledit code de certification étant créé de manière unique pour la transaction en cours de réalisation ;
- des moyens d'obtention d'une donnée de vérification de code de certification de la carte de paiement utilisée pour la transaction ;
- des moyens de détermination d'un code de certification courant associé aux données reçues au sein de la requête transactionnelle ;
- des moyens de comparaison des codes de certification entre eux ;
- des moyens de fourniture, à une entité tierce d'une autorisation de transaction lorsque ladite comparaison est positive..

6. Terminal de communication comprenant des moyens de traitement de transactions et des moyens de sollicitation auprès d'un serveur (SrvT), par l'intermédiaire d'un réseau de communication, l'exécution d'une transaction de paiement impliquant l'utilisation de données de paiement en Mode Carte Non Présente, lesdites données étant relatives à une carte de paiement de type « communication en champ proche » ou NFC, terminal de communication comprenant :
- des moyens de détermination d'une valeur de paramètre de certification, ledit paramètre de certification étant lié à ladite transaction ;
- des moyens d'insertion de la valeur de paramètre de certification au sein d'une requête d'obtention d'un code de certification (ReqCCert) ;
- des moyens d'émission (10), via une communication de type NFC, à destination de ladite carte de paiement, de la requête d'obtention d'un code de certification (ReqCCert) ;
- des moyens de réception (20), via ladite communication de type NFC, en provenance de ladite carte de paiement, dudit code de certification (CCert), lequel est généré par ladite carte de paiement et est établi en fonction dudit paramètre de certification, et d'au moins une donnée dudit terminal de communication, ledit code de certification étant créé de manière unique pour la transaction en cours de réalisation ;
- des moyens d'insertion (30) dudit code de certification (CCert), au sein d'une structure de données de transaction (SDTr), le code de certification étant inséré dans le champ dédié à la réception du code de vérification visuel (CVV) ;
- des moyens de transmission (40) de la structure de données de transaction (SDTr) audit serveur ;
- et des moyens de de réception (50) d'une donnée représentative de la validation (VaIT) de la transaction par ledit serveur.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon une des revendications 1 à 4, lorsqu'il est exécuté sur un ordinateur.

## Patentansprüche

1. Verfahren zur Durchführung einer Transaktion eines Kommunikationsendgeräts (ComT), das bei einem Server (SrvT) unter Vermittlung eines Kommunikationsnetzes den Einsatz einer Zahlungstransaktion anfordert, die die Verwendung von Zahlungsdaten im Modus "Karte nicht präsent" impliziert, wobei sich die Zahlungsdaten auf eine Zahlkarte des Typs "Nahfeldkommunikation" oder NFC beziehen, wobei das Verfahren in dem Kommunikationsendgerät eingesetzt wird, wobei das Verfahren umfasst:
- einen Schritt der Bestimmung eines Werts eines Zertifizierungsparameters, wobei der Zertifizierungsparameter an die Transaktion gebunden ist;
- einen Schritt des Einfügens des Zertifizierungsparameterwerts in eine Anfrage nach Erhalt eines Zertifizierungscodes (ReqCCert);
- einen Schritt des Sendens (10) der Anfrage nach Erhalt eines Zertifizierungscodes (ReqCCert) über eine Kommunikation des Typs NFC an die Zahlkarte;
- einen Schritt des Empfangens (20) des Zertifizierungscodes (CCert) über die Kommunikation des Typs NFC von der Zahlkarte, welcher von der Zahlkarte generiert und in Abhängigkeit von dem Zertifizierungsparameter erstellt wird, und mindestens eines Datums des Kommunikationsendgeräts, wobei der Zertifizierungscode einmalig für die gerade durchgeführte Transaktion kreiert wird;
- einen Schritt des Einfügens (30) des Zertifizierungscodes (CCert) in eine Transaktionsdatenstruktur (SDTr), wobei der Schritt des Einfügens (30) einen Schritt der Auswahl eines bestehenden spezifischen Feldes unter einer Vielzahl von verfügbaren Feldern umfasst, in das der Zertifizierungscode (Ccert) eingefügt wird, wobei das spezifische Feld das Feld ist, das für das Empfangen des visuellen Überprüfungscodes (CVV) bestimmt ist;
- einen Schritt des Übertragens (40) der Transaktionsdatenstruktur (SDTr) an den Server;
- und wenn der von dem Server empfangene Zertifizierungscode mindestens einem erwarteten Zertifizierungscode entspricht, einen Schritt des Empfangens (50) eines Datums, das für die Validierung (ValT) der Transaktion durch den Server repräsentativ ist.

2. Verfahren zur Durchführung einer Transaktion nach Anspruch 1, **dadurch gekennzeichnet, dass** der Zertifizierungsparameter folgender Gruppe angehört, umfassend:
- einen Parameter einer Funktion zum Kreieren des Zertifizierungscodes;
- einen Wert, der für einen Identifikator eines Händlers repräsentativ ist;
- einen Wert der für einen Identifikator eines Kommunikationsendgeräts repräsentativ ist;
- einen Wert, der für die Transaktion repräsentativ ist;
- einen Wert, der für ein Datum und/oder eine Uhrzeit der Transaktion repräsentativ ist.

3. Verfahren zur Durchführung einer Transaktion nach Anspruch 1, **dadurch gekennzeichnet, dass** der Zertifizierungsparameter ein Datum, das für einen Identifikator des Kommunikationsendgeräts repräsentativ ist, und ein Datum, das für eine Uhrzeit der Transaktion repräsentativ ist, umfasst.

4. Verfahren zur Durchführung einer Transaktion nach Anspruch 1, **dadurch gekennzeichnet, dass** der Zertifizierungscode (CCert) für ein Verschlüsselungsvorgang repräsentativ ist, der von der Zahlkarte durchgeführt wird, wobei der Verschlüsselungsvorgang unter Vermittlung einer Kommunikation des Typs NFC zwischen dem Kommunikationsendgerät des Benutzers und der Zahlkarte durchgeführt wird.

5. Server zur Durchführung einer Zahlungstransaktion, der in Form einer elektronischen Vorrichtung, die an ein Kommunikationsnetz angeschlossen ist, vorhanden ist, wobei der Server umfasst:
- Mittel zum Empfangen von einem Kommunikationsendgerät nach Anspruch 6;
- Mittel zum Empfangen einer Transaktionsanfrage, umfassend mindestens ein Datum, das für eine Zahlung im Modus "Karte nicht präsent" repräsentativ ist, die von dem Kommunikationsendgerät aus durchzuführen ist, und einen Zertifizierungscode, wobei sich das mindestens eine Datum auf eine Zahlkarte des Typs "Near Field Communication" oder NFC bezieht, und wobei der Zertifizierungscode von der Zahlkarte generiert und in Abhängigkeit von einem Zertifizierungsparameter und mindestens einem Datum des Kommunikationsendgeräts erstellt und in die Transaktionsanfrage in das Feld eingefügt wird, das für das Empfangen des visuellen Überprüfungscodes (CVV) bestimmt ist, wobei der Zertifizierungscode einmalig für die gerade durchgeführte Transaktion kreiert wird;
- Mittel zum Erhalten eines Datums zur Überprüfung eines Zertifizierungscodes der für die Transaktion verwendeten Zahlkarte;
- Mittel zum Bestimmen eines laufenden Zertifizierungscodes, der den in der Transaktionsanfrage empfangenen Daten zugeordnet ist;
- Mittel zum Vergleichen der Zertifizierungscodes untereinander;
- Mittel zum Liefern einer Transaktionsgenehmigung an eine Dritteinheit, wenn der Vergleich positiv ist.

6. Kommunikationsendgerät, umfassend Mittel zur Durchführung von Transaktionen und Mittel zur Ausführung einer Zahlungstransaktion bei einem Server (SrvT) unter Vermittlung eines Kommunikationsnetzes, bei der die Verwendung von Zahlungsdaten im Modus "Karte nicht präsent" impliziert wird, wobei sich die Daten auf eine Zahlkarte des Typs "Near Field Communication" oder NFC beziehen, wobei das Kommunikationsendgerät umfasst:
- Mittel zur Bestimmung eines Werts eines Zertifizierungsparameters, wobei der Zertifizierungsparameter an die Transaktion gebunden ist;
- Mittel zum Einfügen des Zertifizierungsparameterwerts in eine Anfrage nach Erhalt eines Zertifizierungscodes (REqCCert);
- Mittel zum Senden (10) der Anfrage nach Erhalt eines Zertifizierungscodes (ReqCCert) über eine Kommunikation des Typs NFC an die Zahlkarte;
- Mittel zum Empfangen (20) des Zertifizierungscodes (CCert) über die Kommunikation des Typs NFC von der Zahlkarte, welcher von der Zahlkarte generiert und in Abhängigkeit von dem Zertifizierungsparameter erstellt wird, und mindestens eines Datums des Kommunikationsendgeräts, wobei der Zertifizierungscode einmalig für die gerade durchgeführte Transaktion kreiert wird;
- Mittel zum Einfügen (30) des Zertifizierungscodes (CCert) in eine Transaktionsdatenstruktur (SDTr), wobei der Zertifizierungscode in das spezifische Feld eingefügt wird, das für das Empfangen des visuellen Überprüfungscodes (CVV) bestimmt ist;
- Mittel zum Übertragen (40) der Transaktionsdatenstruktur (SDTr) an den Server;
- und Mittel zum Empfangen (50) eines Datums, das für die Validierung (ValT) der Transaktion durch den Server repräsentativ ist.

7. Computerprogrammprodukt, das von einem Kommunikationsnetz heruntergeladen und/oder auf einem von einem Computer lesbaren Träger gespeichert und/oder von einem Mikroprozessor ausgeführt werden kann, **dadurch gekennzeichnet, dass** es Programmcodebefehle für die Ausführung eines Verfahrens nach einem der Ansprüche 1 bis 4 umfasst, wenn es von einem Computer ausgeführt wird.

## Claims

1. Method for processing a transaction of a communications terminal (ComT), requesting a server (SrvT), through a communications network, for processing of a payment transaction involving the use of payment data in "Card not present" mode, said payment data being related to a "near-field communication", NFC, type payment card, method implemented within the communications terminal, comprising:
- a step for determining a value of a certification parameter, said certification parameter being linked to said transaction;
- a step for inserting the value of the certification parameter into a request for obtaining a certification code (ReqCCert)
- a step for transmitting (10), via a NFC type communication, the request for obtaining a certification code (ReqCCert), to the payment card;
- a step for receiving (20), via said NFC type communication, said certification code (CCert), from said payment card, said certification code being generated by the payment card and being established according to said certification parameter and at least one piece of data of said communications terminal, said certification code being created uniquely for the transaction in progress;
- a step for inserting (30) said certification code (CCert), into a transaction data structure (SDTr), said step of insertion (30) comprising a step of selection, from among a plurality of available fields, of an existing specific field, in which said certification code (CCert) is inserted, said specific field being the field dedicated to the reception of the card verification value (CVV) ;
- a step for transmitting (40) the transaction data structure (SDTr) to said server;
and when the certification code received by said server corresponds to at least one expected certification code, a step for receiving (50) a piece of data representing the validation (VaIT) of the transaction by said server.

2. Method for processing a transaction according to claim 2, **characterized in that** the certification parameter belongs to the group comprising:
- a parameter of a function for creating said certification code;
- a value representing a merchant's identifier;
- a value representing a communications terminal identifier;
- a value representing the transaction;
- a value representing a date and/or time of the transaction.

3. Method for processing a transaction according to claim 1, **characterized in that** the certification parameter comprises a piece of data representing an identifier of said communications terminal and a piece of data representing an actual time of the transaction.

4. Method for processing a transaction according to claim 1, **characterized in that** the certification code (CCert) represents the result of an encryption operation carried out by said payment card, said encryption operation being performed by means of an NFC-type communication between said communications terminal of the user and said payment card.

5. Processing server for processing a payment transaction, taking the form of an electronic device connected to a communications network, said server comprising:
- means for receiving data coming from a communications terminal, according to claim 6;
- means for receiving a transactional request, comprising at least one piece of data representing a payment in "Card not present" mode to be made through said communications terminal and a certification code, said payment data being related to a "near-field communication", NFC, type payment card, and said confirmation code being generated by the payment card and being established according to a certification parameter and at least one piece of data of said communications terminal, and inserted in said transactional request in the field dedicated to the reception of the card verification value (CVV), said certification code being created uniquely for the transaction in progress ;
- means for obtaining a piece of certification code verification data from the payment card;
- means for determining a current certification code associated with the data received within the transactional request;
- means for comparing certification codes with one another;
- means for providing a third-party entity with a transaction authorization when said comparison is positive.

6. Communications terminal comprising transaction processing means and means for requesting a server (SrvT), through a communications network, for the processing of a payment transaction involving the use of payment data in "Card not present" mode, said payment data being related to a "near-field communication", NFC, type payment card, the communications terminal comprising:
- means for determining a value of a certification parameter, said certification parameter being linked to said transaction;
- means for inserting the value of the certification parameter into a request for obtaining a certification code (ReqCCert);
- means for sending (10), via a NFC type communication, the request for obtaining a certification code (ReqCCert), to the payment card;
- means for receiving (20), via said NFC type communication, from said payment card, said verification code (CCert), which is generated by the payment card and is established according to said certification parameter and at least one piece of data of said communication terminal, said certification code being created uniquely for the transaction in progress;
- means for inserting (30) said certification code (CCert), into a transaction data structure (SDTr), said certification code being inserted into the field dedicated to the reception of the card verification value (CVV);
- means for transmitting (40) the transaction data structure (SDTr) to said server;
- and means for receiving (50) a piece of data representing the validation (ValT) of the transaction by said server.

7. Computer program product downloadable from a communications network and/or stored on a computer-readable carrier and/or executable by a microprocessor **characterized in that** it comprises program code instructions for executing a method according to one of claims 1 to 4 when it is executed on a computer
